# FASCICULE DE BREVET EUROPEEN

(11) **EP 2 303 992 B1**
(45) Date de publication et mention de la délivrance du brevet: **19.09.2012**
(21) Numéro de dépôt: 09784250.4
(22) Date de dépôt: 03.07.2009
(51) Int. Cl.: C10G 35/04, C10G 45/48, C07C 5/10, C07C 7/04, C01B 3/02, C10G 7/02

(54) **PROCEDE D'HYDROGENATION DU BENZENE**
VERFAHREN ZUR HYDRIERUNG VON BENZOL
PROCESS FOR THE HYDROGENATION OF BENZENE

(30) Priorité: 18.07.2008 FR 0804102
(43) Date de publication de la demande: 06.04.2011
(73) Titulaire: IFP Energies nouvelles, 92852 Rueil-Malmaison Cedex (FR)
(72) Inventeur: COSYNS, Jean, F-78580 Maule (FR); DEBUISSCHERT, Quentin, F-92500 Rueil Malmaison (FR); LARGETEAU, Delphine, Houston TX 77007 (US); NOCCA, Jean-Luc, Houston TX 77077 (US)
(86) Numéro de dépôt international: PCT/FR2009/000829
(87) Numéro de publication internationale: WO 2010/007244

(56) Documents cités:
- EP-A- 0 949 316
- EP-A- 0 980 909
- AU-B2- 640 039
- US-A- 3 328 476
- US-A- 3 384 570
- US-A- 3 420 907
- US-A- 4 003 956
- US-A1- 2007 299 294

## Description

La présente invention concerne le domaine de l'hydrogénation du benzène, et plus particulièrement un procédé, et le dispositif associé, d'hydrogénation du benzène dans un reformat catalytique.

Le benzène est un composé cancérigène dont la teneur dans les essences est réglementée et réduite à des niveaux toujours plus bas dans un grand nombre de pays.

Lors du reformage catalytique le reformat obtenu contient entre 0,5 et 15% de benzène, et en moyenne entre 2 et 8% de benzène. Une solution pour éliminer ce benzène consiste à l'hydrogéner. Il est donc souhaitable que les raffineries disposant d'unités de reformage catalytique s'équipent en unités d'hydrogénation de benzène.

Les documents US 3 328 476 et US 3 420 907 décrivent un procédé d'hydrogénation du benzène contenu dans un réformat catalytique dans lequel:
- on sépare l'hydrogène présent dans le reformat;
- on sépare une fraction légère enrichie en benzène du réformant appauvri en hydrogène
- on hydrogène le benzène présent dans la fraction légère en présence d'un catalyseur à base de nickel avec l'hydrogène obtenu lors du reformage catalytique.

Les documents EP 980 909 et 949 316 décrivent un procédé d'hydrogénation catalytique du benzène réalisée à une température comprise entre 100 - + 400°C, à une pression comprise entre 0,1-6 MPa et à un VVH de 1-40 h⁻¹

Actuellement le schéma classique d'hydrogénation de benzène consiste à traiter une coupe enrichie en benzène dans une unité d'hydrogénation. Pour cela le reformat issu d'un ballon séparateur moyenne pression disposé en sortie de l'unité de reformage catalytique est envoyé dans une colonne de stabilisation pour éliminer les fractions C4, puis vers un splitter de reformat. La coupe C₅ - C₆ dite reformat léger riche en benzène issue du splitter de reformat est ensuite envoyée vers un réacteur contenant un catalyseur à base de nickel ou de platine.

On opère à des pressions supérieures à 20 bars, ce qui nécessite souvent de compresser l'hydrogène provenant du séparateur moyenne pression de l'unité de reformage catalytique amont.

Avec ce dispositif, les températures opératoires d'entrée au réacteur d'hydrogénation sont le plus généralement supérieures à 130°C si l'on veut hydrogéner le benzène de manière à obtenir la spécification requise, à savoir dans le reformat léger moins de 0,2 % volume et en général; 0,5 % volume dans le reformat total obtenu par mélange du reformat lourd obtenu en fond de splitter de reformat et du reformat léger issu de l'unité d'hydrogénation.

Un des inconvénients de ce schéma de procédé est qu'il est coûteux en investissement et en utilités car il nécessite l'utilisation d'un compresseur d'appoint d'hydrogène pour augmenter la pression opératoire du réacteur ainsi que l'implantation de trois colonnes de distillation, c'est à dire deux colonnes de stabilisation (en aval du reformage catalytique et en aval de l'hydrogénation) et un splitter de reformat.

Un autre inconvénient provient des conditions opératoires, puisqu'il est nécessaire avec ce type de dispositif de travailler à des températures et pressions élevées,

La présente invention a donc pour objet de palier un ou plusieurs des inconvénients de l'art antérieur en proposant un procédé, et le dispositif associé, d'hydrogénation du benzène dont les conditions opératoires ne nécessitent pas l'utilisation de plus de deux colonnes de distillation.

Pour cela la présente invention propose un procédé d'hydrogénation du benzène selon la revendication 1

Le catalyseur utilisé dans le procédé selon l'invention comprend entre 10 et 60% en poids de nickel. Le catalyseur a une surface active dont la dispersion est d'au moins 10%.

Dans le procédé selon l'invention la mise en contact avec le catalyseur est effectuée la VVH est comprise entre 1 et 4.

Selon un mode de réalisation de l'invention le reformat léger est obtenu par soutirage latéral du splitter de reformat.

Selon un mode de réalisation de l'invention on soutire en tête du splitter du reformat les coupes C₄ et C₅.

Selon un mode de réalisation de l'invention les coupes C₄ et C₅ sont envoyées vers une colonne de stabilisation.

Dans un autre mode de réalisation de l'invention le reformat léger est obtenu par soutirage en tête du splitter de reformat.

Dans le procédé selon l'invention une partie du produit hydrogéné, obtenu à l'issu de l'étape de contact entre le reformat léger contenant le benzène et un catalyseur d'hydrogénation, est envoyée vers une colonne de stabilisation.

Selon un mode de réalisation de l'invention le produit hydrogéné est envoyé dans un séparateur gaz-liquide avant d'être envoyé dans la colonne de stabilisation.

Selon un mode de réalisation de l'invention la colonne de stabilisation peut être alimentée par toute coupe hydrocarbure non stabilisée provenant du reformage catalytique.

Selon un mode de réalisation de l'invention on obtient trois coupes en sortie de la colonne de stabilisation :
- une coupe C₄₋ envoyée vers un réseau fuel gas,
- une coupe légère à forte tension de vapeur envoyée vers un site pétrochimique,
- une coupe plus lourde envoyée au pool essence ou vers une unité d'isomérisation.

Selon un mode de réalisation de l'invention la colonne de stabilisation utilisée est une colonne de stabilisation existante de l'unité de reformage catalytique amont.

D'autres caractéristiques et avantages de l'invention seront mieux compris et apparaîtront plus clairement à la lecture de la description faite, ci-après, en se référant aux figures annexées et données à titre d'exemple:
- la figure 1 représente une variante du schéma d'hydrogénation du benzène selon l'invention,
- la figure 2 représente le schéma classique d'hydrogénation du benzène selon l'art antérieur.

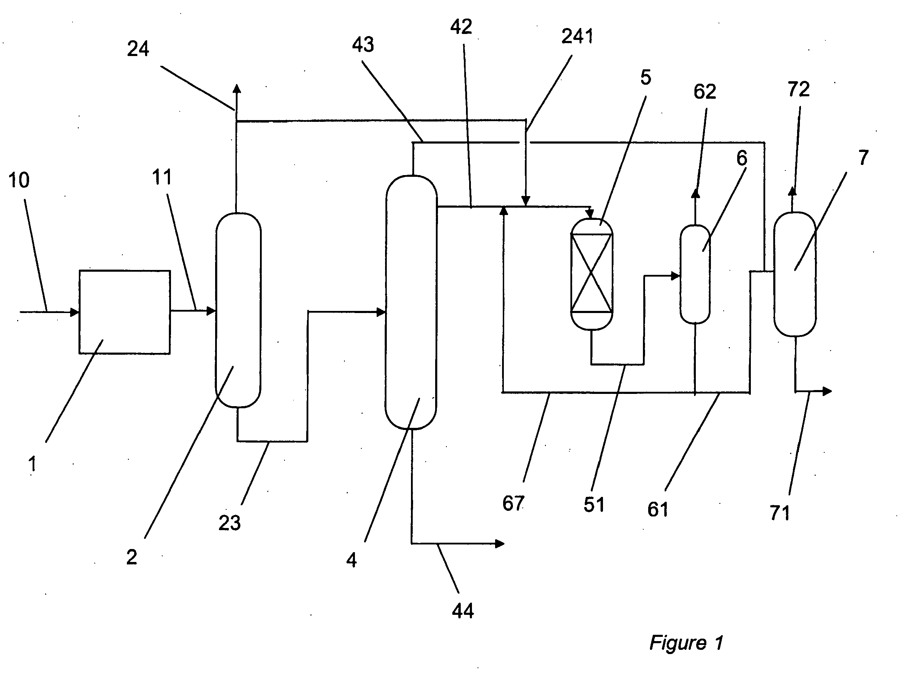

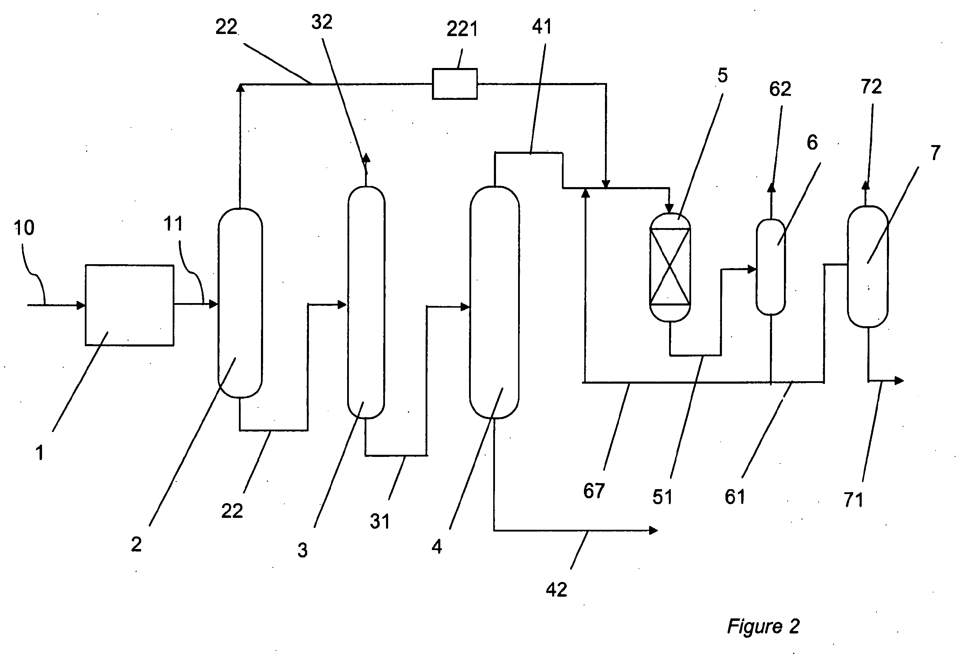

Lors du reformage catalytique les molécules naphténiques de la charge à traiter (10) sont transformées en molécules aromatiques. La charge ainsi obtenue a de cette façon un indice d'octane plus élevé, Cette charge obtenue après reformage catalytique est également appelée reformat. C'est ce reformat qui va être traité afin d'hydrogéner le benzène qu'il contient. Dans les procédés d'hydrogénation du benzène, illustrés sur les figures 1 et 2, l'effluent de la section réactionnelle du reformage catalytique (1) est envoyé (11) dans un ballon de séparation (2) encore appelé séparateur. Ce séparateur (2) fonctionne à moyenne pression, c'est à dire entre 10 et 20 bars, et permet de séparer l'hydrogène (24) du reste du reformat (23). Cet hydrogène (24) sert à alimenter des unités aval consommant de l'hydrogène et notamment pourra être utilisés dans le réacteur d'hydrogénation (5).

Dans le procédé selon l'invention illustré sur la figure 1, le reformat, formé d'une fraction lourde et d'une fraction légère, issu du séparateur (2) est ensuite directement envoyé (23) dans un splitter (4) de reformat qui est une colonne de distillation permettant de séparer la coupe lourde (44) contenant le toluène de la coupe légère (42, 43). Contrairement au procédé d'hydrogénation selon l'art antérieur qui met en oeuvre une colonne de stabilisation (3), illustrée sur la figure 2, le reformat n'est pas stabilisé avant d'être envoyé (23) dans le splitter. Dans le procédé selon l'art antérieur, seules les coupes C₄- (contenant moins de 10 %, de préférence moins de 5 %, et de manière très préférée moins de 1% des coupes C₅+ issues de la section réactionnelle) sont éliminées au niveau de cette colonne de stabilisation (3) et le reformat issu du fond de cette colonne contient moins de 10%, préférence moins de 5%, et de manière très préférée moins de 1% de C₄. Ainsi le reformat léger (41) qui est ensuite envoyé dans le réacteur comporte typiquement moins de 10%, de préférence moins de 7,5%, et de manière très préférée moins de 5 % de C₄₋, plus de 90%, de préférence plus de 95% des C5 et plus de 50%, de préférence plus de 80%, et de manière très préférée plus de 90 % du benzène issus du reformage catalytique.

Le reformat léger obtenu après distillation dans le splitter (4) peut être recueilli soit en soutirage latéral (42), soit en tête de colonne (non illustré sur la figure),

Dans le cas ou le reformat est obtenu en soutirage latéral (42) il est formé d'une coupe enrichie en C₆ et en benzène. Le reformat léger obtenu après distulation dans le splitter (4) et contenant la majeure partie du benzène a un point de coupe ajusté de manière à minimiser la concentration en toluène. Ce point de coupe est généralement compris entre 20 et 100°C, et de préférence entre 30 et 80°C.

Dans le cas où le reformat est obtenu en tête de colonne il est formé d'une coupe C₄., C₅- C₆. benzéne.

Ce reformat léger contenant le benzène, obtenu en tête ou par soutirage latéral, est ensuite envoyé (42) vers un réacteur d'hydrogenation (5). C'est dans ce réacteur (5) qu'a lieu la réaction d'hydrogénation du benzéne contenue dans le reformat léger. Cette réaction se fait en présence de tout ou partie de l'hydrogène provenant (241) du séparateur (2) disposé après l'unité de reformage catalytique (1). Une des caractéristiques de l'invention provient du fait que cet hydrogène est injecté sans recompression, contrairement au dispositif de l'art antérieur qui nécessite une recompression (221) de l'hydrogène. L'hydrogène est utilisé sans récompression car le réacteur utilisé dans le cadre de l'invention travaille à une pression inférieure à celle du ballon séparateur (2). Le fait de ne pas recompresser l'hydrogène est un avantage en terme d'équipement et donc un gain en terme d'investissement.

La pression opératoire de l'unité d'hydrogénation de benzène est généralement assez basse et est comprise entre 10 et 20 bars, et de manière très préférée est comprise entre 12 et 18 bars. La température en entrée du réacteur est comprise entre 90 et 150°C, de manière préférée cette température est comprise entre 95 et 140°C, et de manière très préférée est comprise entre 100 et 120°C. Dans ces conditions le reformat léger se trouve essentiellement en phase liquide. La vitesse spatiale liquide (débit volumique par heure divisé par le volume de catalyseur ou VVH) est comprise entre 0.5 et 10 et de préférence entre 1 et 4.

Le produit hydrogéné obtenu en sortie du réacteur (5) est ensuite envoyé (51) après refroidissement dans un séparateur (6) gaz-liquide. Une partie du liquide est recyclée (67) dans le réacteur (5) de manière à contrôler l'accroissement de température, l'autre partie est envoyée (61) vers une colonne de stabilisation (7) qui peut être une colonne de stabilisation existante de l'unité de reformage. Le reformat léger est obtenu au bas (71) de cette colonne de stabilisation. En tête de colonne on obtient l'excès d'hydrogène de la réaction dans le réacteur et les coupes C₄⁻ provenant de l'hydrogène de la réaction. Dans le cas du procédé selon l'invention on retrouve également en tête de colonne les coupes C₄⁻ provenant du reformat réinjecté.

L'hydrogène (62) excédentaire issu du ballon séparateur (6) gaz-liquide peut être envoyé (62) vers un compresseur qui comprime habituellement l'hydrogène issu du ballon séparateur (2) disposé après l'unité de reformage catalytique.

L'opération d'hydrogénation du benzène à basse pression implique des pressions partielles d'hydrogène basses comprises entre 1 et 2 bars. Pour cela, afin de maximiser la pression partielle (au dessus de 0.5 bar), il est donc préférable pour réduire la concentration en composés légers dans la phase gaz du réacteur de réduire les composés légers du reformat léger (C₅) en prélevant la charge de l'hydrogénation en soutirage latéral du splitter (4) de reformat.

Lorsque la charge envoyée dans l'unité d'hydrogénation provient d'un soutirage latéral du splitter de reformat, la coupe légère soutirée en tête du splitter de reformat et contenant les coupes C₅ et C₄ du reformat est remélangée avec le produit de l'hydrogénation pour être stabilisée dans la colonne de stabilisation (7) ou peut être envoyée à une unité d'isomérisation des paraffines. Bien que les catalyseurs couramment utilisés dans les procédés industriels d'hydrogénation du benzène soient à base aussi bien de platine que de nickel, il a été observé de manière surprenante que seuls les catalyseurs à base de nickel présentaient des performances suffisantes dans le cadre du procédé selon l'invention.

Les catalyseurs au nickel du réacteur utilisés dans le procédé selon l'invention peuvent contenir des teneurs suffisamment élevées en métal à savoir entre 10 et 60 % poids et de préférence au moins 20 % poids. Ils sont préparés par exemple par imprégnation d'un sel de nickel soluble sur un support approprié ou bien par comalaxage avec un gel minéral ou par toute autre technique convenable connue de l'homme du métier.

Le catalyseur est généralement pré-réduit et passivé par des techniques connue de l'homme du métier

Après réduction, le catalyseur doit présenter une surface active suffisamment grande caractérisée notamment par une dispersion (% de nickel superficiel par rapport à % total de nickel) d'au moins 10 % et de préférence supérieure à 20 %.

Le dispositif peut également comprendre un système mixte Pd/Alumine passivée (selon le brevet déposé auprès de l'INPI le 25 avril 2008 sous le numéro 08/02-345) disposé en amont de l'unité d'hydrogénation ou du splitter de reformat (4). Ce système permet de protéger le catalyseur d'hydrogénation de composés chlorés provenant du reformage catalytique (HCl ou chlorures organiques) et d'éviter la formation de sels en tête du splitter de reformat (chlorures d'ammonium).

Lorsque l'unité de reformage existante est déjà équipée en sortie d'une colonne de stabilisation supplémentaire, cette colonne sera localisée en aval de l'unité d'hydrogénation.

Cette colonne dont les dimensions sont plus grandes que celles d'une colonne classiquement utilisée dans les unités d'hydrogénation pourra éventuellement produire trois coupes, une coupe légère C₄₋ envoyée au réseau Fuel Gas, une coupe à forte tension de vapeur envoyée vers un site pétrochimique (valorisée notamment en naphtha pétrochimique) et une coupe lourde envoyée au pool essence ou à une unité d'isomérisation.

Les exemples comparatifs suivant illustrent la présente invention.

### Exemple 1 : hydrogénation du benzène avec un catalyseur à base de nickel en utilisant le procédé selon l'art antérieur

Le dispositif utilisé dans cet exemple est celui décrit sur la figure 2. Ce dispositif comporte en sortie de l'unité de reformage (1) une colonne de séparation (2) dans lequel le reformat issu (11) du reformage est traité de façon à le séparer de l'hydrogène (24). Ce reformat passe (22) ensuite dans une colonne de stabilisation (3) qui permet l'élimination des fractions C4 (32) puis (31) dans un splitter (4). A la sortie du splitter (4) le reformat est séparé en reformat lourd (42) et reformat léger (41) qui va subir une étape d'hydrogénation dans l'unité d'hydrogénation.

Le reformat léger traité à la composition suivante :

| Hydrocarbures | %pds |
|---|---|
| C₄ | 3.7 |
| C₅ | 28.0 |
| C₆ | 32.6 |
| Benzène | 15.0 |
| C₇ | 20.7 |
| Total | 100.0 |

L'hydrogène utilisé est délivré à une pression de 30 bars après recompression dans le ballon séparateur moyenne pression du reformage catalytique et à la composition suivante :

| | % volume |
|---|---|
| H₁ | 90.0 |
| C₁ | 5.6 |
| C₂ | 3.2 |
| C₃ | 0.9 |
| C₄ | 0.3 |
| Chlore (ppm) | 4.0 |

On utilise un catalyseur à base de nickel contenant 25% poids de nickel, présentant une dispersion métallique de 30 % et une surface de 170 m2.

Le catalyseur est chargé dans un réacteur à lit fixe. Il est d'abord prétraité avec l'hydrogène dans les conditions suivantes :
- Pression : 5 bar
- Température : 150°C
- Débit horaire volumique par volume de catalyseur 100 Nm3/m3 CATA ;
- Durée : 6 heures
- Le chlore est éliminé par exemple par absorption dans le système décrit dans le brevet déposé le 25 avril 2008 auprès de l'INPI sous le numéro 08/02-345.

On injecte le reformat léger dans les conditions suivantes :
- LHSV : Débit horaire volumique par volume de catalyseur : 1.5
- Température entrée réacteur : 150 °C
- Pression : 28 bar

L'hydrogène décrit ci ci-dessus est injecté à un débit en assez large excès stoechiométrique par rapport au benzène à hydrogéner de manière à obtenir une pression partielle d'hydrogène à la sortie du réacteur égale a au moins 3 bar effectif. Pour limiter l'accroissement de température dans le réacteur en dessous de 60°C, on recycle le produit hydrogéné au réacteur à un taux d'environ 4.

### Exemple 2 : hydrogénation du benzène avec un catalyseur à base de nickel en utilisant le procédé selon l'invention.

Le dispositif utilisé dans cet exemple est celui décrit sur la figure 1.

Le reformat léger traité à la même composition que celle de l'exemple 1

L'hydrogène utilisé provient du ballon séparateur moyenne pression. Il est délivré à une pression de 18 bar/g et à la même composition que celui de l'exemple 1.

On utilise le catalyseur de l'exemple 1 auquel on fait subir le même traitement.

Le chlore est éliminé de la même manière que dans l'exemple 1.

On injecte le reformat léger dans les conditions suivantes :
- Pression : 16 bar
- LHSV : Débit horaire volumique par volume de catalyseur : 1.5
- Température entrée réacteur : 120°C

L'hydrogène décrit ci-dessus est injecté en léger excès stoechiométrique par rapport au benzène à hydrogéner de manière à obtenir une pression partielle d'H2 à la sortie du réacteur égale à au moins 1 bar effectif.

Pour limiter l'accroissement de température dans le réacteur en dessous une valeur de 60 °C, on recycle le produit hydrogéné au réacteur à un taux d'environ 4.

### Exemple 3 : Comparaison des performances obtenues avec le catalyseur à base de nickel pour le procédé selon l'art antérieur et le procédé selon l'invention.

Les performances obtenues dans les exemples 1 et 2 sont résumées dans le tableau suivant :

| | **Exemple 1** | **Exemple 2** |
|---|---|---|
| Procédé d'hydrogénation du benzène | selon l'art antérieur | selon l'invention |
| Catalyseur | Ni | Ni |
| Delta T Observé (°C) | 25 | 25 |
| Benzène dans le produit final (%vol) | 0.01 | 0.1 |

On constate que dans les deux cas, la conversion du benzène est quasi-totale (> 99 %). Ainsi le procédé selon l'invention, plus économique en terme d'investissement (pression de la section réactionnelle moins élevée, une seule colonne de stabilisation pour le reformage catalytique et

l'hydrogénation de benzène) et plus simple à mettre en oeuvre (pas de recompression de l'hydrogène) permet d'obtenir une hydrogénation quasi complète du benzène.

### Exemple 4 : hydrogénation du benzène avec un catalyseur à base de platine en utilisant le procédé selon l'invention.

Dans cet exemple, on charge le réacteur avec un catalyseur à base de platine. Il contient 0.3 % pds de platine déposé sur alumine présentant une surface spécifique de 200 m²/g. La dispersion du platine est de 100 %.

Les charges liquide et gazeuse ainsi que les conditions opératoires sont les mêmes que celles de l'exemple 2.

### Exemple 5: Comparaison des performances obtenues avec le catalyseur à base de nickel et le catalyseur à base de platine pour le procédé selon l'invention.

Les performances obtenues dans les exemples 2 et 4 sont résumées dans le tableau suivant :

| | **Exemple 2** | **Exemple 4** |
|---|---|---|
| Catalyseur | Ni | Pt |
| Delta T Observé (°C) | 25 | 14 |
| Benzène dans le produit final (%vol) | 0.1 | 1.8 |

On constate que seul le catalyseur au Nickel permet d'obtenir une hydrogénation quasi complète du benzène dans les conditions du schéma de l'invention.

L'utilisation du schéma selon l'invention ainsi que du catalyseur préconisé montre que l'on peut économiser une colonne de distillation à savoir deux colonnes (splitter et un stabiliseur) au lieu de trois dans le schéma classique (splitter et 2 stabiliseurs). L'hydrogène servant d'appoint à l'unité n'est pas comprimé avant d'entrer dans le réacteur.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé d'hydrogénation du benzène contenu dans un reformat catalytique dans lequel :
- on sépare l'hydrogène présent dans le reformat catalytique du reste du reformat au moyen d'un ballon séparateur fonctionnant entre 10 et 20 bar;
- on sépare le réformat en un réformat léger enrichi en benzène et en un reformat lourd;
- on met en contact le reformat léger contenant le benzène avec un catalyseur d'hydrogénation à base de nickel à une température comprise entre 90°C et 150°C, à une pression comprise entre 10 et 20 bar et inférieure à la pression du ballon séparateur, une VVH comprise entre 0,5 et 10, et avec au moins une partie de l'hydrogène obtenu lors de l'étape de séparation de l'hydrogène en tête du ballon séparateur et l'hydrogène étant utilisé sans recompression à la pression de sortie dudit ballon séparateur.

2. Procédé d'hydrogénation du benzène selon la revendication 1 dans lequel le catalyseur comprend entre 10 et 60% en poids de nickel.

3. Procédé d'hydrogénation du benzène selon l'une des revendications 1 a 2 dans lequel le catalyseur a une surface active dont la dispersion est d'au moins 10%.

4. Procédé d'hydrogénation du benzène selon l'une des revendications 1 à 3 dans lequel la température est comprise entre 95°C et 140°C.

5. Procédé d'hydrogénation du benzène selon l'une des revendications 1 à 4 dans lequel la VVH est comprise entre 1 et 4.

6. Procédé d'hydrogénation du benzène selon l'une des revendications 1 à 5 dans lequel le reformat léger est obtenu par soutirage latéral du splitter de réformat (4).

7. Procédé d'hydrogénation du benzène selon la revendication 6 dans lequel on soutire en tête du splitter du réformat (4) les coupes C4 et C5.

8. Procédé d'hydrogénation du benzène selon la revendication 7 dans lequel les coupes C4 et C5 sont envoyées vers une colonne de stabilisation (7).

9. Procédé d'hydrogénation du benzène selon l'une des revendications 1 à 5 dans lequel le reformat léger est obtenu par soutirage en tête du splitter de réformat (4).

10. Procédé d'hydrogénation du benzène selon l'une des revendications 1 à 9 dans lequel une partie du produit hydrogéné, obtenu à l'issu de l'étape de contact entre le réformat léger contenant le benzène et le catalyseur d'hydrogénation, est envoyée vers une colonne de stabilisation (7).

11. Procédé d'hydrogénation du benzène selon la revendication 10 dans lequel le produit hydrogéné est envoyé dans un séparateur (6) gaz-liquide avant d'être envoyé dans la colonne de stabilisation (7)

12. Procédé d'hydrogénation du benzène selon la revendication 11 dans lequel la colonne de stabilisation peut être alimentée par toute coupe hydrocarbure non stabilisée provenant du réformage catalytique.

13. Procédé d'hydrogénation du benzène selon la revendication 12 dans lequel on obtient trois coupes en sortie de la colonne de stabilisation:
• une coupe C4 envoyée vers un réseau fuel gaz,
• une coupe légère à forte tension de vapeur envoyée vers un site pétrochimique,
• une coupe plus lourde envoyée au pool essence ou vers une unité d'isomérisation.

14. Procédé d'hydrogénation du benzène selon la revendication 13 dans lequel la colonne de stabilisation utilisée est une colonne de stabilisation existante de l'unité de reformage catalytique amont.

15. Procédé selon l'une quelconque des revendications précédentes dans lequel la pression partielle d'hydrogène dans l'étape d'hydrogénation du benzène est comprise entre 1 et 2 bar.

## Claims

1. Process for hydrogenation of benzene contained in a catalytic reformate in which:
- the hydrogen that is present in the catalytic reformate is separated from the remainder of the reformate by means of a separator tank operating between 10 and 20 bars,
- a light benzene-enriched fraction and an heavy reformate are separated from the reformate,
- the light reformate that contains the benzene is brought into contact with a nickel-based hydrogenation catalyst at a temperature of between 90°C and 150°C, at a pressure of between 10 and 20 bars, a VVH of between 0.5 and 10, and with at least one portion of hydrogen that is obtained during the separation stage of the hydrogen at the top of the separator tank and wherein the hydrogen is used without recompression at the output pressure of said separator tank.

2. Process for hydrogenation of benzene according to claim 1, in which the catalyst comprises between 10 and 60% by weight of nickel.

3. Process for hydrogenation of benzene according to one of claims I to 2 in which the catalyst has an active surface whose dispersion is at least 10%.

4. Process for hydrogenation of benzene according to one of claims 1 to 3, in which the temperature is between 95°C and 140°C.

5. Process for hydrogenation of benzene according to one of claims I to 4, in which the VVH is between 1 and 4.

6. Process for hydrogenation of benzene according to one of claims 1 to 5, in which the light reformate is obtained by lateral draw-off from the reformate splitter (4).

7. Process for hydrogenation of benzene according to claim 6, in which the C₄ and C₅ fractions are drawn off at the top of the reformate splitter (4).

8. Process for hydrogenation of benzene according to claim 7, in which the C₄ and C₅ fractions are sent to a stabilization column (7).

9. Process for hydrogenation of benzene according to one of claims 1 to 5, in which the light reformate is obtained by draw-off at the top of the reformate splitter (4).

10. Process for hydrogenation of benzene according to one of claims 1 to 9, in which a portion of the dehydrogenated product, obtained at the end of the contact stage between the light reformate that contains benzene and a hydrogenation catalyst, is sent to a stabilization column (7).

11. Process for hydrogenation of benzene according to claim 10, in which the hydrogenated product is sent into a gas-liquid separator (6) before being sent into the stabilisation column (7).

12. Process for hydrogenation of benzene according to claim 11, in which the stabilization column can be supplied by any unstabilized hydrocarbon fraction that is obtained from the catalytic reforming.

13. Process for hydrogenation of benzene according to claim 13, in which three fractions are obtained at the outlet of the stabilization column:
A C₄, fraction that is sent to a diesel fuel network,
- A light fraction with high vapor pressure that is sent to a petrochemical site, A heavier fraction that is sent to the gasoline pool or to an isomerization unit.

14. Process for hydrogenation of benzene according to claim 13, in which the stabilisation column that is used is an existing stabilization column of the upstream catalytic reforming unit.

15. Process for hydrogenation of benzene according to anyone of the preceding claims, in which hydrogen partial pressure in the step of hydrogenating the benzene is of between 1 and 2 bars.

## Patentansprüche

1. Verfahren zum Hydrieren des Benzols, das in einem katalytischen Reformat enthalten ist, wobei:
- der Wasserstoff, der in dem katalytischen Reformat vorhanden ist, vom Rest des Reformats mittels eines Trennbehälters, der zwischen 10 und 20 bar arbeitet, getrennt wird;
das Reformat in ein leichtas Reformat, das mit Benzol angereichert ist, und in ein schweres Reformat getrennt wird;
- das leichte Reformat, das das Benzol enthält, mit einem Hydrierungskatalysator auf Nickelbasis bei einer Temperatur im Bereich zwischen 90 °C und 150 °C, einem Druck im Bereich zwischen 10 und 20 bar und unterhalb eines Drucks des Trennbehälters, einer HSV im Bereich zwischen 0,5 und 10 und mit mindestens einem Teil des Wasserstoffs in Kontakt gebracht wird, der während des Schritts zur Trennung des Wasserstoffs am Kopf des Trennbehälters erhalten wird, und wobei der Wasserstoff ohne Rekompression mit dem Druck am Ausgang aus dem Trennbehälter verwendet wird.

2. Verfahren zum Hydrieren des Benzols nach Anspruch 1, wobei der Katalysator zwischen 10 und 60 Gew.-% Nickel umfasst.

3. Verfahren zum Hydrieren des Benzols nach einem der Ansprüche 1 bis 2, wobei der Katalysator eine aktive Oberfläche aufweist, deren Dispersion mindestens 10 % beträgt.

4. Verfahren zum Hydrieren des Benzole nach einem der Ansprüche 1 3, wobei die Temperatur im Bereich zwischen 95 °C und 140 °C liegt.

5. Verfahren zum Hydrieren des Benzols nach einem der Ansprüche 1 bis 4, wobei die HSV im Bereich zwischen 1 und 4 liegt.

6. Verfahren zum Hydrieren des Benzols nach einem der Ansprüche 1 bis 5, wobei das leichte Reformat durch seitliches Abziehen aus dem Reformat-Splitter (4) erhalten wird.

7. Verfahren zum Hydrieren des Benzols nach Anspruch 6, wobei am Kopf des Reformat-Splitters (4) die Schnitte C4 und C5 abgezogen werden.

8. Verfahren zum Hydrieren des Benzols nach Anspruch 7, wobei die Schnitte C4 und C5 in eine Stabilisierungskolonne (7) geschickt werden.

9. Verfahren zum Hydrieren des Benzols nach einem der Ansprüche 1 bis 8, wobei das leichte Reformat durch Abziehen am Kopf des Reformat-Splitters (4) erhalten wird.

10. Verfahren zum Hydrieren des Benzols nach einem der Ansprüche 1 bis 9, wobei ein Teil des hydrierten Produkts, das am Ende des Kontaktschritts zwischen dem leichten Reformat, das das Benzol enthält, und dem Hydrierungskatalysator erhalten wird, in eine Stabilisierungskolonne (7) geschickt wird.

11. Verfahren zum Hydrieren des Benzols nach Anspruch 10, wobei das hydrierte Produkt in einen Gas-Flüssigkeits-Separator (6) geschickt wird, bevor es in die Stabilisierungskolonne (7) geschickt wird.

12. Verfahren zum Hydrieren des Benzols nach Anspruch 11, wobei die Stabilisierungskolonne mit jedem nicht stabilisierten Kohlenwasserstoffschnitt versorgt werden kann, der aus dem katalytischen Reforming stammt.

13. Verfahren zum Hydrieren des Benzols nach Anspruch 12, wobei am Ausgang der Stabilisierungskolonne drei Schnitte erhalten werden:
• ein Schnitt C4, der in ein Brenngasnetz geschickt wird,
• ein leichter Schnitt mit hohem Dampfdruck, der in eine petrochemische Anlage geschickt wird,
- ein schwererer Schnitt, der in den Benzinpool oder in eine Isomerisierungseinheit geschickt wird.

14. Verfahren zum Hydrieren des Benzols nach Anspruch 13, wobei die verwendete Stabilisierungskolonne eine vorhandene Stabilisierungskolonne der stromaufwärtigen katalytischen Reforming-Einheit ist.

15. Verfahren nach einem der vorhergehenden Ansprüche, wobei der Wasserstoffpartialdruck im Schritt zum Hydrieren des Benzols im Bereich zwischen 1 und 2 bar liegt.
